# EUROPÄISCHE PATENTSCHRIFT

(11) **EP 3 385 104 B1**
(45) Veröffentlichungstag und Bekanntmachung des Hinweises auf die Patenterteilung: **02.10.2019**
(21) Anmeldenummer: 18163544.2
(22) Anmeldetag: 23.03.2018
(51) Int. Cl.: B60K 13/04, F16B 5/02, F16B 41/00

(54) **MONTAGEBAUGRUPPE**
INSTALLATION ASSEMBLY
ENSEMBLE DE MONTAGE

(30) Priorität: 04.04.2017 DE 102017107162
(43) Veröffentlichungstag der Anmeldung: 10.10.2018
(73) Patentinhaber: Eberspächer Exhaust Technology GmbH & Co. KG, 66539 Neunkirchen (DE)
(72) Erfinder: Guérin, Véronique, 70190 Stuttgart (DE)
(74) Vertreter: Ruttensperger Lachnit Trossin Gomoll

(56) Entgegenhaltungen:
- DE-U1- 9 211 255
- DE-U1-202013 000 387
- FR-A1- 2 893 682
- US-A1- 2006 056 936

## Beschreibung

Die vorliegende Erfindung betrifft eine Montagebaugruppe gemäß dem Oberbegriff des Anspruchs 1, welche beispielsweise genutzt werden kann, um in einem Kraftfahrzeug eine Komponente, beispielsweise einer Abgasanlage, an dem Kraftfahrzeug festzulegen.

Eine derartige Montagebaugruppe kann ein bügelartig ausgebildetes und aus Metallmaterial aufgebautes Montageelement umfassen, das einerseits zur Befestigung an einer durch dieses festzulegenden Komponente, beispielsweise einer Abgasanlage, ausgebildet ist, und das andererseits zumindest eine Montageelementdurchgriffsöffnung aufweist, durch welche ein Befestigungsbolzen, beispielsweise ein Schraubbolzen, hindurchgeführt werden kann, so dass nach Aufbringen einer Mutter auf den Schraubbolzen eine feste Verbindung realisiert ist. Auch die Verbindung mit der vermittels des Montageelements festzulegenden Komponente kann auf diese Art und Weise erfolgen.

Um bei derartigen Montagebaugruppen eine Vormontage eines Montageelements mit einem oder mehreren Befestigungsbolzen, insbesondere Schraubbolzen, zu realisieren und dabei dafür zu sorgen, dass ein Herausfallen der Befestigungsbolzen aus von diesen jeweils durchsetzten Montageelementdurchgriffsöffnungen vermieden wird, ist es bekannt, Sicherungselemente, wie Haltescheiben oder Sprengringe oder dergleichen an den die zugeordneten Montageelementdurchgriffsöffnungen durchsetzenden Befestigungsbolzen vorzusehen. Derartige Sicherungselemente weisen jedoch einen vergleichsweise massiven Aufbau auf und können nur in solchen Anwendungszwecken eingesetzt werden, in welchen die herzustellende Verbindung zwischen einem Montageelement und einer anderen Baugruppe durch das Vorhandensein eines derartigen massiven Sicherungselements nicht beeinträchtigt ist.

Eine Montagebaugruppe gemäß dem Oberbegriff des Anspruchs 1 ist aus der FR 2 893 682 A1 bekannt. Vermittels dieser bekannten Montagebaugruppe wird ein Turbolader an einem Auslasskrümmer einer Brennkraftmaschine festgelegt. Die Montagebaugruppe umfasst an dem Turbolader ein plattenartiges Montageelement mit zwei darin ausgebildeten, langlochartigen Montageelementdurchgriffsöffnungen für zur Festlegung des Turboladers an dem Auslasskrümmer vorgesehene Schraubbolzen. Durch ein auf dem Auslasskrümmer aufliegend zu positionierendes, plattenartiges Halteelement werden die Schraubbolzen am Auslasskrümmer in einer Vormontagestellung gehalten, so dass der Turbolader mit seinem Montageelement an den Auslasskrümmer herangeführt und bezüglich diesem in einer ein Anziehen der Schrauben zulassenden Montagestellung positioniert werden kann.

DE 92 11 255 U1 offenbart eine weitere Montagebaugruppe nach dem Stand der Technik.

Es ist die Aufgabe der vorliegenden Erfindung, eine Montagebaugruppe bereitzustellen, bei welcher in einfacher und zuverlässiger Art und Weise ein ungewolltes Loslösen eines Befestigungsbolzens von einem Montageelement verhindert wird.

Erfindungsgemäß wird diese Aufgabe gelöst durch einen Montagebaugruppe gemäß Anspruch 1. Diese umfasst ein vermittels wenigstens eines Befestigungsbolzens festzulegendes Montageelement, wobei in dem Montageelement wenigstens eine Montageelementdurchgriffsöffnung für den Durchgriff wenigstens eines Befestigungsbolzen vorgesehen ist, wobei in Zuordnung zu wenigstens einer Montageelementdurchgriffsöffnung eine Montagehilfseinheit an dem Montageelement vorgesehen ist, wobei die Montagehilfseinheit in Zuordnung zu der Montageelementdurchgriffsöffnung eine bezüglich der Montageelementdurchgriffsöffnung derart ausgerichtet positionierte Montagehilfseinheitdurchgriffsöffnung aufweist, dass ein die Montagehilfseinheitdurchgriffsöffnung umgebender Randbereich der Montagehilfseinheit die Montageelementdurchgriffsöffnung bereichsweise überdeckend angeordnet ist.

Um bei der Montage des Montageelements eine größere Freiheit in der Positionierung desselben erreichen zu können, ist die Montageelementdurchgriffsöffnung langgestreckt und weist quer zu ihrer Längserstreckungsrichtung eine Öffnungsbreite auf, wobei die Öffnungsbreite größer ist als ein Außendurchmesser eines die Montageelementdurchgriffsöffnung durchgreifend zu positionierenden oder positionierten Befestigungsbolzens. Die Montageelementdurchgriffsöffnung ist somit nach Art eines Langlochs ausgebildet und gestattet die Bewegung eines dieses durchsetzenden Befestigungsbolzens insbesondere in Richtung der Längserstreckung der Montageelementdurchgriffsöffnung.

Aus Stabilitätsgründen ist die Montagehilfseinheit aus Metallmaterial aufgebaut. Da ferner das Montageelement aus Metallmaterial aufgebaut ist, ist bei dem erfindungsgemäßen Aufbau vorgesehen, dass die Montagehilfseinheit durch Verschweißung, vorzugsweise Punktschweißen, am Montageelement festgelegt ist.

Da bei der erfindungsgemäßen Montagebaugruppe eine einen Zusammenhalt mit einem oder mehreren Befestigungsbolzen bereitstellende Montagehilfseinheit am Montageelement selbst vorgesehen ist, wird die Funktionalität eines so gesicherten Befestigungsbolzens bei der weiteren Montage, insbesondere die Zusammenwirkung mit einem Arretierelement, wie zum Beispiel einer Mutter oder dergleichen, durch die Montagehilfseinheit nicht beeinträchtigt.

Um den Zusammenhalt des Montageelements mit einem oder mehreren Befestigungsbolzen weiter zu verbessern, wird vorgeschlagen, dass die Montagehilfseinheit mit zwei einander gegenüberliegenden Abschnitten des Randbereichs die Montageelementdurchgriffsöffnung bereichsweise überdeckend angeordnet ist.

Dabei kann eine zuverlässige Haltewirkung dadurch gewährleistet werden, dass ein Abstand der beiden Abschnitte des Randbereichs kleiner ist als ein Außendurchmesser eines die Montageelementdurchgriffsöffnung durchgreifend zu positionierenden oder positionierten Befestigungsbolzens.

Um dabei unabhängig von der Relativpositionierung zwischen dem Befestigungsbolzen und dem Montageelement eine zuverlässige Haltewechselwirkung erzielen zu können, wird vorgeschlagen, dass die Montagehilfseinheitdurchgriffsöffnung langgestreckt ist und eine Öffnungsbreite aufweist, wobei eine Öffnungsbreite der Montagehilfseinheitdurchgriffsöffnung kleiner ist als die Öffnungsbreite der Montageelementdurchgriffsöffnung. Somit kann beispielsweise über die gesamte Länge der Montageelementdurchgriffsöffnung eine Haltewechselwirkung zwischen dem diese durchsetzenden Befestigungsbolzen und der dieser Montageelementdurchgriffsöffnung zugeordneten Montagehilfseinheit erreicht werden. Insbesondere kann dabei vorgesehen sein, dass jeder der beiden Abschnitte des Randbereichs der Montagehilfseinheitdurchgriffsöffnung ein in der Längserstreckungsrichtung der Montagehilfseinheitdurchgriffsöffnung sich erstreckender Längsrandabschnitt ist.

Für einen besonders einfach herzustellenden Aufbau wird vorgeschlagen, dass die Montagehilfseinheit ein Montagehilfselement umfasst, und dass die Montagehilfseinheitdurchgriffsöffnung eine in dem Montagehilfselement ausgebildete Öffnung ist.

Dabei ist das Montagehilfselement besonders einfach handzuhaben und bezüglich des Montageelements zu positionieren, wenn die in dem Montagehilfselement ausgebildete Öffnung geschlossen ist.

Bei einer alternativen Ausgestaltungsart kann die Montagehilfseinheit zwei unter Bereitstellung eines die Montagehilfseinheitdurchgriffsöffnung bildenden

Zwischenraums angeordnete Montagehilfselemente umfassen. Dabei kann jedes der beiden Montagehilfselement einen der Abschnitte des Randbereichs bereitstellen.

Um eine Beeinträchtigung des unter Verwendung der Montagebaugruppe aufzubauenden Systems durch das Vorhandensein eines oder mehrerer Montagehilfselement zu vermeiden, wird vorgeschlagen, dass die Montagehilfseinheit eine Dicke von weniger als 0,1 mm, vorzugsweise weniger als 0,08 mm, am meisten bevorzugt von etwa 0,05 mm, aufweist. Ein derart dünnes Montagehilfselement kann als verlorenes Bauteil zwischen dem Montageelement und der mit diesem zusammenzubauenden Baugruppe verbleiben, ohne dass dadurch eine Beeinträchtigung des so aufgebauten Systems entsteht.

Die erfindungsgemäß aufgebaute Montagebaugruppe kann so bereitgestellt werden, dass in wenigstens einer Montageelementdurchgriffsöffnung wenigstens ein Befestigungsbolzen durch eine der Montageelementdurchgriffsöffnung zugeordnete Montagehilfseinheit gehalten ist.

Wenigstens ein Befestigungsbolzen kann beispielsweise ein Schraubbolzen sein.

Es ist darauf hinzuweisen, dass bei ein und derselben Montagebaugruppe eine oder mehrere Montageelementdurchgriffsöffnungen in einem Montageelement vorgesehen sein können, wobei vorteilhafterweise, aber nicht notwendigerweise, jeder Montageelementdurchgriffsöffnung eine Montagehilfseinheit zugeordnet sein kann. Sind mehrere Montagehilfseinheiten an einem Montageelement vorgesehen, können diese zueinander gleich oder verschieden gestaltet sein.

Die vorliegende Erfindung wird nachfolgend mit Bezug auf die beiliegenden Figuren detailliert beschrieben. Es zeigt:
- Fig. 1: eine Montagebaugruppe mit einem Montageelement und zwei daran vorgesehenen Montagehilfseinheiten,
- Fig. 2: ein Montagehilfselement in Verbindung mit einem eine Montagehilfseinheitdurchgriffsöffnung desselben durchsetzenden Befestigungsbolzen.

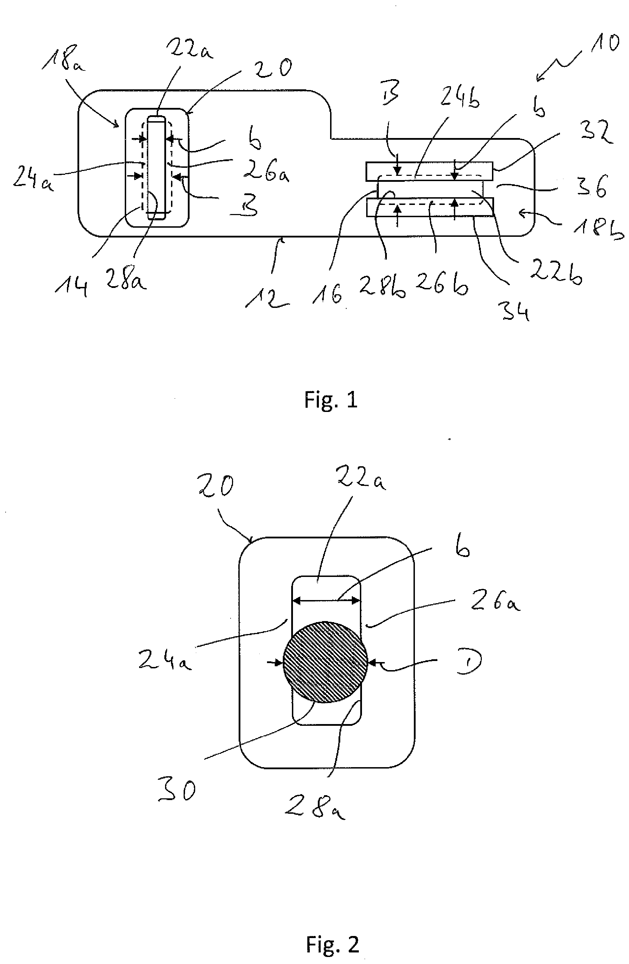

Die Fig. 1 zeigt in Draufsicht eine Montagebaugruppe 10, die beispielsweise eingesetzt werden kann, um in einem Kraftfahrzeug eine Abgasanlage an dem Kraftfahrzeug festzulegen.

Die Montagebaugruppe 10 umfasst ein beispielsweise aus Blechmaterial geformtes, bügelartiges Montageelement 12, in welchem zwei Montageelementdurchgriffsöffnungen 14, 16 ausgebildet sind. Die beiden Montageelementdurchgriffsöffnungen sind langgestreckt und somit nach Art jeweiliger Langlöcher ausgebildet. Sie weisen quer zu ihrer Längserstreckung eine Öffnungsbreite B auf, die größer ist, als der Durchmesser eines diese durchsetzend zu positionierenden Befestigungsbolzens. Ein derartiger Befestigungsbolzen ist vorzugsweise als Schraubbolzen ausgebildet und kann durch Zusammenwirken mit einem als Mutter oder dergleichen ausgebildeten Arretierelement zur Festlegung der Montagebaugruppe 10 genutzt werden.

In Zuordnung zu jeder der beiden Montageelementdurchgriffsöffnungen 14, 16 ist jeweils eine Montagehilfseinheit 18a bzw. 18b vorgesehen. Diese Montagehilfseinheiten 18a, 18b sorgen dafür, dass vor dem Anbringen eines Arretierelements, also beispielsweise einer Mutter, an einem die jeweils zugeordnete Montageelementdurchgriffsöffnung 14 bzw. 16 durchsetzenden Befestigungsbolzen ein ungewolltes Loslösen derartiger Befestigungsbolzen von dem Montageelement 12 verhindert wird bzw. ein Loslösen des Montageelements 12 von eine jeweilige Montageelementdurchgriffsöffnung 14 bzw. 16 durchsetzenden Befestigungsbolzen vermieden wird.

Die in Zuordnung zu der Montageelementdurchgriffsöffnung 14 vorgesehene Montagehilfseinheit 18a umfasst ein aus sehr dünnem Metallmaterial, vorzugsweise Blechmaterial, aufgebautes Montagehilfselement 20. Das Montagehilfselement 20 weist vorzugsweise eine Dicke im Bereich von 0,05 mm auf und ist mit dem Montageelement 12 beispielsweise durch Punktschweißen fest verbunden.

Das Montagehilfselement 20 weist in Zuordnung zur Montageelementdurchgriffsöffnung 14 eine Montagehilfseinheitdurchgriffsöffnung 22a auf. In Zuordnung zu der langgestreckten Konfiguration der Montageelementdurchgriffsöffnung 14 ist auch die Montagehilfseinheitdurchgriffsöffnung 22a langgestreckt und weist eine Öffnungsbreite b auf, die kleiner ist als die Öffnungsbreite B der Montageelementdurchgriffsöffnung 12. Die Erstreckungslänge der Montagehilfseinheitdurchgriffsöffnung 22a entspricht im Wesentlichen der Erstreckungslänge der Montageelementdurchgriffsöffnung 14, kann jedoch auch geringfügig größer oder kleiner als diese sein.

Das Montagehilfselement 20 ist mit seiner Montagehilfseinheitdurchgriffsöffnung 22a so bezüglich der Montageelementdurchgriffsöffnung 14 positioniert, dass beispielsweise Längsmittenachsen dieser beiden Öffnungen zueinander ausgerichtet verlaufen. Somit ergibt sich eine Konfiguration, bei welcher in Richtung der Öffnungsbreite b der Montagehilfseinheitdurchgriffsöffnung 22a einander gegenüberliegende Abschnitte 24a, 26a eines die Montagehilfseinheitdurchgriffsöffnung 22a umgebenden Randbereichs 28a des Montagehilfselements 20 die Montageelementdurchgriffsöffnung 14 bereichsweise überdecken, so dass mit diesen Abschnitten 24a, 26a das Montagehilfselement 20 sich in den Bereich der Montageelementdurchgriffsöffnung 14 erstreckt.

Die Fig. 2 zeigt das Montagehilfselement 20 in Zusammenwirkung mit einem die Montageelementdurchgriffsöffnung 14 und auch die Montagehilfseinheitdurchgriffsöffnung 22a durchsetzenden Befestigungsbolzen 30, welcher beispielsweise als Schraubbolzen ausgebildet ist. Man erkennt in Fig. 2, dass die Öffnungsbreite b auf den Durchmesser D des allgemein mit im Wesentlicher kreisrunder Querschnittsgeometrie bereitgestellten Befestigungsorgans 30 so abgestimmt ist, dass die Öffnungsbreite b kleiner ist, als der Durchmesser D. Selbstverständlich ist die Montageelementdurchgriffsöffnung 14 so dimensioniert, dass deren Öffnungsbreite B zumindest geringfügig größer ist als der Durchmesser D, so dass der Befestigungsbolzen 30 die Montageelementdurchgriffsöffnung 14 durchgreifend positioniert werden kann und bei die Montageelementdurchgriffsöffnung 14 durchgreifendem Befestigungsbolzen 30 das Montageelement 12 in seine für den Einbau vorgesehene Lage gebracht werden kann.

Aufgrund der Ausgestaltung des Montagehilfselements 20 aus sehr dünnem und somit auch vergleichsweise leicht verformbarem Material wird dort, wo der Befestigungsbolzen 30 durch die Montageelementdurchgriffsöffnung 14 hindurchgeführt wird, der Befestigungsbolzen 30 auch durch die Montagehilfseinheitdurchgriffsöffnung 22a hindurch bewegt und somit lokal das Montagehilfselement 20 im Bereich der Abschnitte 24a, 26a des Randbereichs 28a verformt oder ggf. sogar zerstört. Gleichwohl umgreift das Montagehilfselement 20 den die Montagehilfseinheitdurchgriffsöffnung 22a durchsetzenden Befestigungsbolzen 30 und kann bei Ausgestaltung des Befestigungsbolzens 30 als Schraubbolzen in das Außengewinde desselben eingreifen. Somit wird durch das vergleichsweise dünne Montagehilfselement 20 der Montagehilfseinheit 18a der Befestigungsbolzen 30 in seiner die Montageelementdurchgriffsöffnung 14 durchgreifenden Positionierung gehalten, kann gleichwohl aber in Richtung der Längserstreckung der Montageelementdurchgriffsöffnung 14 und auch der Montagehilfseinheitdurchgriffsöffnung 22a bewegt werden. Aufgrund der vergleichsweise kleinen Dicke des Montagehilfselements 20 wird dabei eine Beschädigung des Befestigungsbolzens 30 an seinem Außenumfangsbereich, insbesondere einem dort ggf. vorgesehenen Gewinde, ausgeschlossen. Insbesondere dann, wenn vorteilhafterweise in Richtung der Öffnungsbreite das Montagehilfselement 20 bezüglich der Montageelementdurchgriffsöffnung 14 zentriert ist und somit die beiden Abschnitte 24a, 26a des Randbereichs 28a, betrachtet in Richtung der Öffnungsbreite, im Wesentlichen im gleichen Ausmaß die Montageelementdurchgriffsöffnung 14 übergreifen, wird durch das Montagehilfselement 20 zusätzlich eine Zentrierwirkung für das Befestigungsorgan 30 bezüglich der Montageelementdurchgriffsöffnung 14 in Richtung der Öffnungsbreite B erreicht.

Es ist darauf hinzuweisen, dass die in den Fig. 1 und 2 dargestellte Ausgestaltung des Montagehilfselements 20 mit einer geschlossenen darin ausgebildeten Montagehilfseinheitdurchgriffsöffnung 22a insbesondere bei Verwendung von sehr dünnem Aufbaumaterial für das Montagehilfselement 20 aufgrund der leichteren Handhabbarkeit besonders bevorzugt ist. Grundsätzlich könnte die Montagehilfseinheitdurchgriffsöffnung 22a jedoch auch an zumindest einem Umfangsbereich offen ausgebildet sein, so dass beispielsweise das Montagehilfselement 20, abweichend von der dargestellten O-förmigen Gestalt, eine im Wesentlichen C-förmige Gestalt aufweisen könnte.

Die in Zuordnung zu der Montageelementdurchgriffsöffnung 16 vorgesehene Montagehilfseinheit 18b umfasst zwei band- bzw. streifenartig ausgebildete Montagehilfselemente 32, 34. Jedes dieser beiden Montagehilfselemente 32, 34 ist vorzugsweise aus sehr dünnem Metall- bzw. Blechmaterial, beispielsweise mit einer Dicke im Bereich von etwa 0,05 mm, bereitgestellt und durch Verschweißung, vorzugsweise Punktschweißen, am Montageelement 12 festgelegt.

Die beiden Montagehilfselemente 32, 34 sind bezüglich der langgestreckt ausgebildeten Montageelementdurchgriffsöffnung 16 so positioniert, dass sie sich in Richtung der Längserstreckung der Montageelementdurchgriffsöffnung 16 erstrecken und zwischen sich einen die Montagehilfseinheitdurchgriffsöffnung 22b bereitstellenden Abstand 36 belassen. Dieser die Öffnungsbreite b der Montagehilfseinheitdurchgriffsöffnung 22b definierende Abstand 36 ist so dimensioniert ,dass er geringfügig kleiner ist als die Öffnungsbreite B der Montageelementdurchgriffsöffnung 16. Somit erstrecken sich die beiden Montagehilfselemente 32, 34 die Montageelementdurchgriffsöffnung 16 jeweils mit Abschnitten 24b, 26b eines durch diese bereitgestellten Randbereichs 28b der Montagehilfseinheit 18b überdeckend. Dabei kann die gleiche Haltewechselwirkung zwischen der Montagehilfseinheit 18b und einem die Montageelementdurchgriffsöffnung 16 durchsetzenden Befestigungsbolzen erreicht werden, wie vorangehend mit Bezug auf die Fig. 1 und 2 anhand des Montagehilfselements 20 der Montagehilfseinheit 18a erläutert.

Es ist abschließend darauf hinzuweisen, dass, wie in Fig. 1 dargestellt, in Zuordnung zu ein und demselben Montageelement Montagehilfseinheiten unterschiedlicher Bauart eingesetzt werden können, grundsätzlich aber auch baugleiche Montagehilfseinheiten vorgesehen sein können. Ferner ist es selbstverständlich möglich, dass dann, wenn an einem Montageelement mehrere Montageelementdurchgriffsöffnungen vorgesehen sind, nur in Zuordnung zu einer derartigen Montageelementdurchgriffsöffnung eine Montagehilfseinheit vorgesehen werden kann bzw. soll, bei welcher auch eine Sicherungsfunktion realisiert werden soll.

Eine derartige erfindungsgemäß aufgebaute Montagebaugruppe kann in Zuordnung zu einer oder mehreren Montageelementdurchgriffsöffnungen einen diese durchsetzend positionierten und durch eine zugeordnete Montagehilfseinheit gesicherten Befestigungsbolzen umfassen und als Vormontagebaugruppe dann an der geeigneten Positionierung angeordnet und befestigt werden. Grundsätzlich könnten die jeweils eine Montageelementdurchgriffsöffnung durchgreifend zu positionierenden Befestigungsbolzen jedoch auch an derjenigen Baugruppe jeweils vormontiert sein, an welcher die Montagebaugruppe festzulegen ist. Diese kann dann bei der Anbringung so positioniert werden, dass die an der anderen Baugruppe bereits vorgesehenen Befestigungsbolzen die Montagehilfseinheitdurchgriffsöffnungen in der Montagebaugruppe durchsetzen. Durch die Sicherungswechselwirkung zwischen den Befestigungsbolzen und diesen jeweils zugeordneten Montagehilfseinheiten wird ein Loslösen der Montagebaugruppe von den Befestigungsbolzen verhindert, so dass nachfolgend in einfacher Weise Arretierelemente, wie z. B. Muttern, auf die Befestigungsbolzen aufgebracht und somit die Montagebaugruppe festgelegt werden kann.

Obgleich aus Stabilitätsgründen der Aufbau der Montagehilfseinheiten aus vergleichsweise dünnem Blechmaterial besonders vorteilhaft ist, ist es selbstverständlich, dass auch andere Materialien, wie z. B. folienartiges Kunststoffmaterial, eingesetzt werden können, wobei derartige Materialien dann beispielsweise durch Verklebung auf einem Montageelement festgelegt werden können.

## Patentansprüche

1. Montagebaugruppe, umfassend ein vermittels wenigstens eines Befestigungsbolzens (30) festzulegendes, aus Metallmaterial aufgebautes Montageelement (12), wobei in dem Montageelement (12) wenigstens eine Montageelementdurchgriffsöffnung (14, 16) für den Durchgriff wenigstens eines Befestigungsbolzens (30) vorgesehen ist, wobei die Montageelementdurchgriffsöffnung (14, 16) langgestreckt ist und quer zu ihrer Längserstreckungsrichtung eine Öffnungsbreite (B) aufweist, wobei die Öffnungsbreite (B) größer ist als ein Außendurchmesser (D) eines die Montageelementdurchgriffsöffnung (14, 16) durchgreifend zu positionierenden oder positionierten Befestigungsbolzens (30), **dadurch gekennzeichnet, dass** in Zuordnung zu wenigstens einer Montageelementdurchgriffsöffnung (14, 16) eine aus Metallmaterial aufgebaute Montagehilfseinheit (18a, 18b) an dem Montageelement (12) durch Verschweißung festgelegt ist, wobei die Montagehilfseinheit (18a, 18b) in Zuordnung zu der Montageelementdurchgriffsöffnung (14, 16) eine bezüglich der Montageelementdurchgriffsöffnung (14, 16) derart ausgerichtet positionierte Montagehilfseinheitdurchgriffsöffnung (22a, 22b) aufweist, dass ein die Montagehilfseinheitdurchgriffsöffnung (22a, 22b) umgebender Randbereich (28a, 28b) der Montagehilfseinheit (18a, 18b) die Montageelementdurchgriffsöffnung (14, 16) bereichsweise überdeckend angeordnet ist.

2. Montagebaugruppe nach Anspruch 1, **dadurch gekennzeichnet, dass** die Montagehilfseinheit (18a, 18b) mit zwei einander gegenüberliegenden Abschnitten (24a, 26a, 24b, 26b) des Randbereichs (28a, 28b) die Montageelementdurchgriffsöffnung (14, 16) bereichsweise überdeckend angeordnet ist.

3. Montagebaugruppe nach Anspruch 2, **dadurch gekennzeichnet, dass** ein Abstand der beiden Abschnitte (24a, 26a, 24b, 26b) des Randbereichs (18a, 18b) kleiner ist als ein Außendurchmesser (D) eines die Montageelementdurchgriffsöffnung (14, 16) durchgreifend zu positionierenden oder positionierten Befestigungsbolzens (30).

4. Montagebaugruppe nach einem der vorangehenden Ansprüche, **dadurch gekennzeichnet, dass** die Montagehilfseinheitdurchgriffsöffnung (22a, 22b) langgestreckt ist und eine Öffnungsbreite (b) aufweist, wobei eine Öffnungsbreite (b) der Montagehilfseinheitdurchgriffsöffnung (22a, 22b) kleiner ist als die Öffnungsbreite (B) der Montageelementdurchgriffsöffnung (14, 16).

5. Montagebaugruppe nach Anspruch 2 und Anspruch 4, **dadurch gekennzeichnet, dass** jeder der beiden Abschnitte (24a, 26a, 24b, 26b) des Randbereichs (28a, 28b) der Montagehilfseinheitdurchgriffsöffnung (22a, 22b) ein in der Längserstreckungsrichtung der Montagehilfseinheitdurchgriffsöffnung (22a, 22b) sich erstreckender Längsrandabschnitt ist.

6. Montagebaugruppe nach einem der vorangehenden Ansprüche, **dadurch gekennzeichnet, dass** die Montagehilfseinheit (18a) ein Montagehilfselement (20) umfasst, und dass die Montagehilfseinheitdurchgriffsöffnung (22a) eine in dem Montagehilfselement (20) ausgebildete Öffnung ist.

7. Montagebaugruppe nach Anspruch 6, **dadurch gekennzeichnet, dass** die in dem Montagehilfselement (20) ausgebildete Öffnung geschlossen ist.

8. Montagebaugruppe nach einem der Ansprüche 1-6, **dadurch gekennzeichnet, dass** die Montagehilfseinheit (18b) zwei unter Bereitstellung eines die Montagehilfseinheitdurchgriffsöffnung (22b) bildenden Zwischenraums (36) angeordnete Montagehilfselemente (32, 34) umfasst.

9. Montagebaugruppe nach Anspruch 2 und Anspruch 8, **dadurch gekennzeichnet, dass** jedes der beiden Montagehilfselement (32, 34) einen der Abschnitte (24b, 26b) des Randbereichs (28b) bereitstellt.

10. Montagebaugruppe nach einem der vorangehenden Ansprüche, dass die Montagehilfseinheit (18a, 18b) eine Dicke von weniger als 0,1 mm, vorzugsweise weniger als 0,08 mm, am meisten bevorzugt von etwa 0,05 mm, aufweist.

11. Montagebaugruppe nach einem der vorangehenden Ansprüche, **dadurch gekennzeichnet, dass** in wenigstens einer Montageelementdurchgriffsöffnung (14, 16) wenigstens ein Befestigungsbolzen (30) durch eine der Montageelementdurchgriffsöffnung (14, 16) zugeordnete Montagehilfseinheit (18a, 18b) gehalten ist.

12. Montagebaugruppe nach einem der vorangehenden Ansprüche, **dadurch gekennzeichnet, dass** wenigstens ein Befestigungsbolzen (30) ein Schraubbolzen ist.

## Claims

1. Mounting assembly unit, comprising a mounting element (12) made of a metal material, to be fixed by means of at least one fastening bolt (30), wherein at least one mounting element passage opening (14, 16) is provided in the mounting element (12) for the passage of at least one fastening bolt (30), wherein the mounting element passage opening (14, 16) is elongated and has an opening width (B) transverse to its direction of longitudinal extension, the opening width (B) being greater than an external diameter (D) of a fastening bolt (30), which is to be positioned or is positioned passing through the mounting element passage opening (14, 16), **characterized in that** in association to at least one mounting element passage opening (14, 16), a mounting aid unit (18a, 18b) made of a metal material is fixed to the mounting element (12) by welding wherein the mounting aid unit (18a, 18b) comprises in association to the mounting element passage opening (14, 16) a mounting aid unit passage opening (22a, 22b), which is positioned aligned with respect to the mounting element passage opening (14, 16) such that an edge area (28a, 28b) of the mounting aid unit (18a, 18b) surrounding the mounting aid unit passage opening (22a, 22b), is arranged overlapping the mounting element passage opening (14, 16) in some areas.

2. Mounting assembly unit in accordance with claim 1, **characterized in that** the mounting aid unit (18a, 18b) with two sections (24a, 26a, 24b, 26b) of the edge area (28a, 28b) located opposite one another is arranged overlapping the mounting element passage opening (14, 16) in some areas.

3. Mounting assembly unit in accordance with claim 2, **characterized in that** a distance of the two sections (24a, 26a, 24b, 26b) of the edge area (18a, 18b) is shorter than an external diameter (D) of a fastening bolt (30), which is to be positioned or is positioned passing through the mounting element passage opening (14, 16).

4. Mounting assembly unit in accordance with one of the preceding claims, **characterized in that** the mounting aid unit passage opening (22a, 22b) is elongated and has an opening width (b), wherein an opening width (b) of the mounting aid unit passage opening (22a, 22b) is smaller than the opening width (B) of the mounting element passage opening (14, 16).

5. Mounting assembly unit in accordance with claim 2 and claim 4, **characterized in that** each of the two sections (24a, 26a, 24b, 26b) of the edge area (28a, 28b) of the mounting aid unit passage opening (22a, 22b) is a longitudinal edge section extending in the direction of longitudinal extension of the mounting aid unit passage opening (22a, 22b).

6. Mounting assembly unit in accordance with one of the preceding claims, **characterized in that** the mounting aid unit (18a) comprises a mounting aid element (20), and that the mounting aid unit passage opening (22a) is an opening formed in the mounting aid element (20).

7. Mounting assembly unit in accordance with claim 6, **characterized in that** the opening formed in the mounting aid element (20) is closed.

8. Mounting assembly unit in accordance with one of the claims 1-6, **characterized in that** the mounting aid unit (18b) comprises two mounting aid elements (32, 34) arranged so as to provide an intermediate space (36) forming the mounting aid unit passage opening (22b).

9. Mounting assembly unit in accordance with claim 2 and claim 8, **characterized in that** each of the two mounting aid elements (32, 34) provides one of the sections (24b, 26b) of the edge area (28b).

10. Mounting assembly unit in accordance with one of the preceding claims, **characterized in that** the mounting aid unit (18a, 18b) has a thickness of less than 0.1 mm, preferably of less than 0.08 mm, and most preferably of about 0.05 mm.

11. Mounting assembly unit in accordance with one of the preceding claims, **characterized in that** in at least one mounting element passage opening (14, 16), at least one fastening bolt (30) is held by a mounting aid unit (18a, 18b) associated with the mounting element passage opening (14, 16).

12. Mounting assembly unit in accordance with one of the preceding claims, **characterized in that** at least one fastening bolt (30) is a screw bolt.

## Revendications

1. Unité d'assemblage de montage comprenant un élément de montage (12) fait d'un matériau métallique, à fixer au moyen d'au moins un boulon de fixation (30), au moins une ouverture de passage d'élément de montage (14, 16) étant prévue dans l'élément de montage (12) pour le passage d'au moins un boulon de fixation (30), l'ouverture de passage d'élément de montage (14, 16) étant allongée et présentant une largeur d'ouverture (B) transversalement à sa direction d'extension longitudinale, la largeur d'ouverture (B) étant supérieure à un diamètre extérieur (D) d'un boulon de fixation (30) qui doit être placé ou est placé passant par l'ouverture de passage d'élément de montage (14, 16), **caractérisé en ce qu'**en association à au moins une une ouverture de passage d'élément de montage (14, 16) une unité d'aide au montage (18a, 18b) faite d'un matériau métallique est fixée à l'élément de montage (12) par soudure, où l'unité d'aide au montage (18a, 18b), en association à l'ouverture de passage d'élément de montage (14, 16), comporte une ouverture de passage d'unité d'aide au montage (22a, 22b) positionnée alignée par rapport à l'ouverture de passage d'élément de montage (14, 16) de sorte qu'une zone de bord (28a, 28b) de l'unité d'aide au montage (18a, 18b) entourant l'ouverture de passage d'unité d'aide au montage (22a, 22b) recouvre certaines zones de l'ouverture de passage d'élément de montage (14, 16).

2. Unité d'assemblage de montage selon la revendication 1, **caractérisée en ce que** l'unité d'aide au montage (18a, 18b) avec deux sections opposées (24a, 26a, 24b, 26b) de la zone de bord (28a, 28b) est arrangée recouvrant certaines zones de l'ouverture de passage d'élément de montage (14, 16).

3. Unité d'assemblage de montage selon la revendication 2, **caractérisée en ce qu'**une distance des deux sections (24a, 26a, 24b, 26b) de la zone de bord (18a, 18b) est inférieure à un diamètre extérieur (D) d'un boulon de fixation (30) qui doit être placé ou est placé en passant par l'ouverture de passage d'élément de montage (14, 16).

4. Unité d'assemblage de montage selon une des revendications précédentes, **caractérisée en ce que** l'ouverture de passage d'unité d'aide au montage (22a, 22b) est allongée et présente une largeur d'ouverture (b), où une largeur d'ouverture (b) de l'ouverture de passage d'unité d'aide au montage (22a, 22b) est inférieure à la largeur d'ouverture (B) de l'ouverture de passage d'élément de montage (14, 16).

5. Unité d'assemblage de montage selon la revendication 2 et la revendication 4, **caractérisée en ce que** chacune des deux sections (24a, 26a, 24b, 26b) de la zone de bord (28a, 28b) de l'ouverture de passage d'unité d'aide au montage (22a, 22b) est une section de bord longitudinale s'étendant dans la direction d'extension longitudinale de l'ouverture de passage d'unité d'aide au montage (22a, 22b).

6. Unité d'assemblage de montage selon l'une des revendications précédentes, **caractérisée en ce que** l'unité d'aide au montage (18a) comprend un élément d'aide au montage (20), et **en ce que** l'ouverture de passage d'unité d'aide au montage (22a) est une ouverture formée dans l'élément d'aide au montage (20).

7. Unité d'assemblage de montage selon la revendication 6, **caractérisée en ce que** l'ouverture formée dans l'élément d'aide au montage (20) est fermée.

8. Unité d'assemblage de montage selon l'une des revendications 1-6, **caractérisée en ce que** l'unité d'aide au montage (18b) comprend deux éléments d'aide au montage (32, 34) agencés de manière à fournir un espace intermédiaire (36) formant l'ouverture de passage d'unité d'aide au montage (22b).

9. Unité d'assemblage de montage selon la revendication 2 et la revendication 8, **caractérisée en ce que** chacun des deux éléments d'aide au montage (32, 34) prévoit une des sections (24b, 26b) de la zone de bord (28b).

10. Unité d'assemblage de montage selon l'une des revendications précédentes **caractérisée** en que l'unité d'aide au montage (18a, 18b) a une épaisseur inférieure à 0,1 mm, de préférence inférieure à 0,08 mm, et de manière plus préférée d'environ 0,05 mm.

11. Unité d'assemblage de montage selon l'une des revendications précédentes, **caractérisée en ce que** dans au moins une ouverture de passage d'élément de montage (14, 16), au moins un boulon de fixation (30) est maintenu par une unité d'aide au montage (18a, 18b) associée à l'ouverture de passage d'élément de montage (14, 16).

12. Unité d'assemblage de montage selon l'une des revendications précédentes, **caractérisée en ce qu'**au moins un boulon de fixation (30) est un boulon fileté.
